## Europäisches Patentamt

## European Patent Office

## Office européen des brevets

(19)

(11) Veröffentlichungsnummer: **0 088 286**
**A1**

(12) # EUROPÄISCHE PATENTANMELDUNG

(21) Anmeldenummer: **83101719.9**

(22) Anmeldetag: **23.02.83**

(51) Int. Cl.³: **C 08 L 67/02**

(30) Priorität: **09.03.82 DE 3208440**

(43) Veröffentlichungstag der Anmeldung: **14.09.83**
**Patentblatt 83/37**

(84) Benannte Vertragsstaaten: **BE CH DE FR GB IT LI NL SE**

(71) Anmelder: **BAYER AG, Zentralbereich Patente, Marken und Lizenzen, D-5090 Leverkusen 1, Bayerwerk (DE)**

(72) Erfinder: **Tacke, Peter, Dr., Brandenburger Strasse 12, D-4150 Krefeld 1 (DE)**
Erfinder: **Bottenbruch, Ludwig, Dr., Woehlerstrasse 5, D-4150 Krefeld 1 (DE)**
Erfinder: **Freitag, Dieter, Dr., Hasenheide 10, D-4150 Krefeld 1 (DE)**
Erfinder: **Reinking, Klaus, Dr., Robert-Stolz-Strasse 16b, D-5632 Wermelskirchen (DE)**

(54) **Verstärkte Polyalkylenterephthalate, Verfahren zu ihrer Herstellung und ihre Verwendung zur Herstellung von Formkörpern.**

(57) Mischungen aus Polyalkylenterephthalaten und Poly-mesomorphen Kondensaten, die mit den Polyalkylenterephthalaten ein zweiphasiges System bilden, besitzen eine stark erhöhte Steifigkeit.

EP 0 088 286 A1

0088286

BAYER AKTIENGESELLSCHAFT    5090 Leverkusen, Bayerwerk

Zentralbereich
Patente, Marken und Lizenzen   Pv/ABc

Verstärkte Polyalkylenterephthalate, Verfahren zu ihrer Herstellung und ihre Verwendung zur Herstellung von Formkörpern

Die Erfindung betrifft Polyalkylenterephthalate, deren Steifigkeit durch Zumischen mesomorpher Polykondensate, die mit den Polyalkylenterephthalaten ein zweiphasiges System bilden, erhöht ist, ein Verfahren zur Herstellung dieser Mischungen in der Schmelze und ihre Verwendung zur Herstellung von Formkörpern.

Die Herstellung von Formmassen mit erhöhter Steifigkeit durch Verstärkung von Thermoplasten mit Mineralfasern ist seit Jahrzehnten bekannt. Asbest-, Kohlenstoff- und insbesondere Glasfasern haben als verstärkende Materialien weite Verbreitung gefunden. Zum einen erhöhen sie jedoch in unerwünschter Weise die Dichte der Formmassen, andererseits führen sie zu hohem Verschleiß der Verarbeitungsmaschinen. Außerdem müssen die meisten Verstärkungsfasern zur Verbesserung des Verbunds Faser/Harz nachbehandelt werden.

Überraschenderweise wurde nun gefunden, daß sogenannte mesomorphe Polykondensate die Steifigkeit von Polyalkylenterephthalaten beträchtlich erhöhen, sofern sie mit

Le A 21 606 - Ausland

0088286

- 2 -

diesen Polyalkylenterephthalaten nicht einphasig mischbar sind, sondern mit ihnen (im Festkörper) ein zweiphasiges System bilden.

Als "mesomorph" bezeichnet man solche Polykondensate, die flüssig-kristalline Schmelzen bilden. Sie sind hinreichend bekannt, vergleiche z. B.

F. E. McFarlane et al., Liquid Crystal Polymers II, Contemporary Topics in Polymer Science, Vol. 2, Plenum Publishing Corporation, 1977;

S. L. Kwolek et al., Macromolecules 10, 1390 (1977);

W. J. Jackson und H. F. Kuhfuss, J. Polymer Science, Polymer Chem. Ed. 14, 2042 (1976);

W. C. Wooten et al. in A. Ciferri "Ultra-high Modulus Polymers", Applied Science Publ., London 1979, S. 362 f.;

A. Blumstein et al., "Liquid Crystalline Order in Polymers", Academic Press 1978;

EP 22 344, 24 499, 15 856, 17 310, 15 088, 8 855,
WO 79/01034, 79/797 und
DE-OS 2 751 653.

Der flüssig-kristalline Zustand der Polykondensatschmelzen läßt sich mit Hilfe eines Polarisationsmikroskops untersuchen: Für die Untersuchungen war das Okular mit

Le A 21 606

einem Aufsatz ausgerüstet, der eine Photodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergab sich dann ein Wert von 0.01 Skalenteilen.

Die Schichtdicke der untersuchten Polykondensatschmelzen betrug 100 µm.

Die Untersuchung der flüssig-kristallinen Schmelzen erfolgte nach dem Aufschmelzen der Proben bei Temperaturen, bei denen die Schmelzen so dünnflüssig waren, daß sie durch geringfügiges Verschieben des Deckgläschens zwischen diesem und dem Objektträger in heftige Turbulenz versetzt wurden.

Um sicherzustellen, daß die optische Anisotropie der Schmelzen auf einen flüssig-kristallinen Zustand und nicht etwa auf in der Schmelze schwimmende Kristalle des Polykondensats zurückzuführen ist, wurde die Schmelze nach der Messung noch weitere 30 °C über die Untersuchungstemperatur aufgeheizt. Kristalle schmelzen dabei auf, wodurch die optische Anisotropie der Schmelze verschwindet. Nur wenn die Aufhellung der zwischen Nicolschen Prismen beobachteten Schmelze trotz des weiteren Aufheizens nicht verschwand, wurden die Polykondensate als mesomorph eingestuft. Sie zeigten in der Meßanordnung Werte über 1 Skalenteil, meist Werte von 3

Le A 21 606

- 4 -

bis 90 Skalenteilen. Für amorphe Schmelzen, z.B. aromatische Polycarbonate, wurden dagegen Werte von weniger als 0,1 Skalenteil gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüsssig-kristalliner Komponenten mittels Röntgenweitwinkelstreuung in der Schmelze nachzuweisen, wie es z.B. bei G.W. Gray und P.A. Windsor, "Plastic Crystals, Physico-Chemical Properties and Methods of Investigation", insbesondere Chapter 3, John Wiley & Sons, New York, Sydney, Toronto 1974 beschrieben ist.

Die Zweiphasigkeit der erfindungsgemäßen Mischungen läßt sich in den meisten Fällen im normalen Lichtmikroskop (Vergrößerung bis 1:1500) feststellen.

Weisen sowohl das Polyalkylenterephthalat als auch das mesomorphe Polykondensat den gleichen Brechungsindex auf, dann ist diese Methode jedoch ungeeignet. Man benutzt in solchen Fällen ein Elektronenmikroskop; in schwierigen Fällen werden die Proben vor der Untersuchung angeätzt, beispielsweise mit Osmiumtetroxid. Die Zweiphasigkeit bezieht sich immer auf den festen Aggregatzustand bei 25°C.

Gegenstand der Erfindung sind also Mischungen aus

Le A 21 606

A.   55 bis 99, vorzugsweise 65 bis 90, Gewichtsteilen
     Polyalkylenterephthalat,

B.   1 bis 45, vorzugsweise 10 bis 35, Gewichtsteilen
     wenigstens eines mesomorphen Polykondensates, das
     mit der Komponente A bei Raumtemperatur ein zweiphasiges System bildet, und gegebenenfalls

C.   0,5 bis 40 Gew.-Teilen Verstärkungsfasern, die
     nicht aus A oder B bestehen.

Weiterer Gegenstand der Erfindung ist ein Verfahren zur
Herstellung dieser Mischungen durch Homogenisieren der
Komponenten in der Schmelze.

Weiterer Gegenstand der Erfindung ist die Verwendung
der obigen Mischungen zur Herstellung von Formkörpern,
insbesondere durch Spritzguß oder Extrusion.

Polyalkylenterephthalate A im Sinne der Erfindung sind
Reaktionsprodukte aus Terephthalsäure oder ihren reaktionsfähigen Derivaten (z.B. Dimethylestern) und aliphatischen, cycloaliphatischen oder araliphatischen
Diolen und Mischungen dieser Reaktionsprodukte.

Bevorzugte Polyalkylenterephthalate A lassen sich aus
Terephthalsäure (oder ihren reaktionsfähigen Derivaten)
und aliphatischen oder cycloaliphatischen Diolen mit
2 bis 10 C-Atomen nach bekannten Methoden herstellen

Le A 21 606

(Kunststoff-Handbuch, Bd. VIII, S. 695 ff, Carl Hanser Verlag, München 1973).

Bevorzugte Polyalkylenterephthalate A enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol-, Propandiol-1,2-, Propandiol-1,3-, Hexandiol-1,6- und/oder Butandiol-1,4-reste.

Die bevorzugten Polyalkylenterephthalate A können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandicarbonsäure.

Die bevorzugten Polyalkylenterephthalate A können neben den oben genannten Diolresten, vorzugsweise neben Ethylen- bzw. Butandiol-1,4-glykolresten, bis zu 20 Mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und -1,5, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-ß-hydroxy-

Le A 21 606

0088286

- 7 -

ethoxyphenyl)-propan und 2,2-Bis-(4-hydroxypropoxy-
phenyl)-propan (DE-OS 24 07 674, 24 07 776, 27 15 932).

Die Polyalkylenterephthalate A können durch Einbau
relativ kleiner Mengen 3- oder 4-wertiger Alkohole
oder 3- oder 4-basischer Carbonsäuren, wie sie z.B.
in der DE-OS 19 00 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit.

Es ist ratsam, nicht mehr als 1 Mol-% des Verzweigungsmittels, bezogen auf die Säurekomponente, zu verwenden.

Besonders bevorzugt sind Polyalkylenterephthalate A,
die allein aus Terephthalsäure und deren reaktionsfähigen Derivaten (z.B. deren Dialkylestern) und
Ethylenglykol und/oder Butandiol-1,4 hergestellt worden sind, und Mischungen dieser Polyalkylenterephthalate.

Bevorzugte Polyalkylenterephthalate A sind auch Copolyester, die aus mindestens zwei der obengenannten Säurekomponenten und/oder aus mindestens zwei der obengenannten Alkoholkomponenten hergestellt sind; besonders bevorzugte Copolyester sind Poly-(ethylenglykol/butandiol-
1,4)-terephthalate.

Die als Komponente A vorzugsweise verwendeten Polyalkylenterephthalate besitzen im allgemeinen eine Intrinsic-

Le A 21 606

Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Die mesomorphen Polykondensate B können z.B. aus den folgenden Verbindungen hergestellt werden:

o-, m- oder p-Hydroxy-benzoesäure,
Hydrochinon,
durch Halogen, C$_1$- bis C$_3$-Alkyl oder Phenyl substituierte Hydrochinone,
Hydroxy-naphthalin-carbonsäuren,
Isophthalsäure,
Terephthalsäure,
Naphthalindicarbonsäure,
4,4'-Dihydroxydiphenyl,
4,4'-Dihydroxy-stilben,
1,2-Bis(p-carboxy-phenoxy)ethan,
4,4'-Dihydroxydphenylether,
4,4'-Diphenylether-dicarbonsäure,
Resorcin,
4,4'-Benzophenondicarbonsäure,
4,4'-Dihydroxy-diphenylsulfid,
4,4'-Dihydroxy-diphenylsulfon,
2,5-Furandicarbonsäure,
4,4'-Bis(p-hydroxy-phenoxy)diphenylether,
1,2-Bis(p-hydroxyphenyl)ethan,
Dihydroxyanthrachinone,
4,4'-Hydroxy-diphenylether-carbonsäure,
Azobenzoldicarbonsäure,

Le A 21 606

- 9 -

Bisphenol-A,
Ethylenglykol, Hexandiol-1,6, Adipin-, Sebacinsäure,
Kohlensäure.

Bevorzugte mesomorphe Polykondensate B sind Polyester.

Nicht sämtliche Kombinationen der oben aufgezählten Ausgangsmaterialien ergeben mesomorphe Polykondensate. Der Fachmann wird seine Auswahl jeweils anhand der oben zitierten Literatur treffen oder aber aufgrund seiner Erfahrung empirisch vorgehen. Da die mesomorphen Polykondensate B an sich bekannt sind, kann eine längere Ausführung an dieser Stelle entfallen.

Als Verzweigungsmittel können zur Herstellung der mesomorphen Polykondensate B mehr als bifunktionelle Verbindungen, vorzugsweise Carbonsäuren und/oder Phenole eingesetzt werden. Sie werden in der Regel in Mengen bis zu 1 Mol-%, bezogen auf die Summe sämtlicher Ausgangsverbindungen, verwendet.

Als Kettenabbrecher können in die mesomorphen Polykondensate B monofunktionelle Verbindungen, vorzugsweise Phenole und/oder Carbonsäuren einkondensiert werden. Bevorzugte Kettenabbrecher sind z. B.

Phenol,
$C_7$-$C_{20}$-Alkylphenole,
Benzoesäure und Alkylbenzoesäuren mit bis zu 20 C-Atomen im Alkylrest.
Weiterhin kommen Kohlensäurehalbester in Betracht.

Le A 21 606

Die Baugruppen können sowohl statistisch als auch in Form von Blöcken verteilt sein.

Die mesomorphen Polykondensate B besitzen vorzugsweise relative Viskositäten von 1,1 bis 1,5, insbesondere von 1,2 bis 1,4, gemessen an einer Lösung von 0,5 g Polykondensat B in 100 ml Phenol/o-Dichlorbenzol (1:1 Gewichtsteile) bei 25°C.

Die Einarbeitung der mesomorphen Polykondensate B in die Polyalkylenterephthalate A erfolgt vorzugsweise in Extrudern. Es sind jedoch auch Kneter, Walzen oder Rührgefäße geeignet.

Bevorzugte Verstärkungsfasern C sind unter den Verarbeitungsbedingungen der erfindungsgemäßen Mischungen nicht schmelzende organische Polykondensate, z. B. Polyamide, sowie Kohlenstoff- und Mineralfasern, z. B. Glasfasern.

Le A 21 606

- 11 -

Beispiele

In den nachfolgenden Beispielen gelangen folgende aromatische Polyester A zum Einsatz:

A 1: ein Polybutylenterephthalat mit einer Intrinsic-Viskosität von 1,15 dl/g, gemessen wie in der Beschreibung angegeben

A 2: ein Polyethylenterephthalat mit einer Intrinsic-Viskosität von 0,65 dl/g, gemessen wie in der Beschreibung angegeben.

In den nachfolgenden Beispielen gelangen folgende mesomorphe Polykondensate B zum Einsatz:

B 1: Gemäß Beispiel 1 der DE-OS 2 348 697 und 2 348 698 wurde ein Cokondensat aus 65 Mol-% p-Hydroxybenzoesäure und 35 Mol-% Polyethylenterephthalat hergestellt. Die relative Lösungsviskosität, gemessen an einer Lösung von 0,5 g des Cokondensates in 100 ml Phenol/o-Dichlorbenzol (1:1 Gewichtsteile) bei 25°C, betrug 1,31.

Untersuchung des mesomorphen Zustandes der Schmelze:

Untersuchungstemperatur 330°C : 47 Skalenteile
360°C : 43 Skalenteile

Le A 21 606

B 2: Gemäß der japanischen Patentschrift 45 850 wurde nach dem Acetat-Umesterungsverfahren ein Cokondensat aus 43 Mol-% p-Hydroxy-benzoesäure und je 28,5 Mol-% Isophthalsäure und Hydrochinon hergestellt. Die relative Lösungsviskosität, gemessen wie bei B 1 angegeben, des Produktes lag bei 1,283.

Untersuchung des mesomorphen Zustandes der Schmelze:

Untersuchungstemperatur 380°C : 51 Skalenteile
                        410°C : 45 Skalenteile

Jeweils 30 Gewichtsteile der mesomorphen Polyester B 1 und B 2 wurden auf einem Doppelwellenextruder in 70 Gew.-Teile der Polyalkylenterephthalate A 1 und A 2 eingearbeitet. Die an Spritzguß-Prüfkörpern erhaltenen Daten sind der nachfolgenden Tabelle zu entnehmen.

| Legierung | E-Modul aus Zugversuch (MPa) | Reißfestigkeit (MPa) | Kerbschlagzähigkeit (kJ/m²) |
|---|---|---|---|
| A1/B1 | 4360 | 70 | 2 |
| A1/B2 | 4180 | 67 | 2 |
| A2/B1 | 5230 | 79 | 2 |
| A2/B2 | 5180 | 74 | 2 |

Der E-Modul wurde nach   DIN 53 457,
die Reißfestigkeit nach   DIN 53 455
und die Kerbschlagzähigkeit nach DIN 53 453 bestimmt.

Le A 21 606

## Patentansprüche

1. Mischungen aus

   A.  55 bis 99 Gewichtsteilen Polyalkylenterephthalat,

   B.  1 bis 45 Gewichtsteilen mesomorphem Polykondensat, das mit der Komponente A bei Raumtemperatur ein zweiphasiges System bildet, und gegebenenfalls

   C.  0,5 bis 40 Gewichtsteilen Verstärkungsfasern, die nicht aus A oder B bestehen.

2. Mischungen nach Anspruch 1, dadurch gekennzeichnet, daß sie aus

   65  bis 90 Gewichtsteilen A,
   10  bis 35 Gewichtsteilen B und gegebenenfalls
   0,5 bis 40 Gewichtsteilen C bestehen.

3. Mischungen nach Ansprüchen 1 und 2, dadurch gekennzeichnet, daß das Polyalkylenterephthalat A eine Intrinsic-Viskosität von 0,4 bis 1,5 dl/g, gemessen in Phenol/o-Dichlorbenzol (1:1 Gewichtsteile) bei 25°C, besitzt.

4. Mischungen nach Ansprüchen 1-3, dadurch gekennzeichnet, daß das Polyalkylenterephthalat A eine Intrinsic-Viskosität von 0,5 bis 1,3 dl/g, ge-

Le A 21 606

messen in Phenol/o-Dichlorbenzol (1:1 Gewichtsteile) bei 25°C, besitzt.

5. Mischungen nach Ansprüchen 1-4, dadurch gekennzeichnet, daß das Polyalkylenterephthalat A eine Intrinsic-Viskosität von 0,6 bis 1,2 dl/g, gemessen in Phenol/o-Dichlorbenzol (1:1 Gewichtsteile) bei 25°C, besitzt.

6. Mischungen nach Ansprüchen 1-5, dadurch gekennzeichnet, daß das Polyalkylenterephthalat ein Polyethylenterephthalat und/oder ein Polybutylenterephthalat ist.

7. Mischungen nach Ansprüchen 1-6, dadurch gekennzeichnet, daß das Polyalkylenterephthalat ein Poly(ethylenglykol/butandiol-1,4)-terephthalat ist.

8. Verfahren zur Herstellung der Mischungen nach Ansprüchen 1-7 durch Homogenisieren der Komponenten in der Schmelze.

9. Verwendung der Mischungen nach Ansprüchen 1 - 7 zur Herstellung von Formkörpern, insbesondere durch Spritzguß.

Europäisches
Patentamt
EUROPÄISCHER RECHERCHENBERICHT
0088286
Nummer der Anmeldung

EP 83 10 1719

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | GB-A-2 078 240 (CELANESE CORP.)<br><br>* Ansprüche 1-5, 17-19; Beispiele 1-3; Tabellen I-III; Seite 5, Zeilen 40-58 *<br><br>--- | 1-6,8, 9 | C 08 L 67/02 |
| X | EP-A-0 030 417 (IBM LTD.)<br>* Ansprüche 1, 5-7, 9, 10; Beispiele 2, 10 *<br><br>----- | 1-6,8 | |

RECHERCHIERTE
SACHGEBIETE (Int. Cl. 3)

C 08 L 67/00

Der vorliegende Recherchenbericht wurde für alle Patentansprüche erstellt.

| Recherchenort BERLIN | Abschlußdatum der Recherche 01-06-1983 | Prüfer HASS C V F |
|---|---|---|